# NEUE EUROPÄISCHE PATENTSCHRIFT

(11) **EP 1 908 709 B2**
(45) Veröffentlichungstag und Bekanntmachung des Hinweises auf die Entscheidung über den Einspruch: **29.10.2014**
(45) Hinweis auf die Patenterteilung: 16.02.2011
(21) Anmeldenummer: 07019506.0
(22) Anmeldetag: 05.10.2007
(51) Int. Cl.: B65G 47/90, B65G 57/24, B65G 61/00

(54) **Vorrichtung zur Aufnahme und Umpositionierung von Gebinden**
Device for taking up and repositioning containers
Dispositif destinés à la réception et au repositionnement de récipients

(30) Priorität: 07.10.2006 DE 102006047554
(43) Veröffentlichungstag der Anmeldung: 09.04.2008
(73) Patentinhaber: KUKA Roboter GmbH, 86165 Augsburg (DE)
(72) Erfinder: Hagenbrock, Werner, 83075 Bad Feilnbach (DE)
(74) Vertreter: Schlotter, Alexander Carolus Paul

(56) Entgegenhaltungen:
- EP-A- 0 631 951
- DE-C2- 19 914 264
- FR-A- 2 878 238
- GB-A- 2 066 201
- US-A1- 2005 063 815

## Beschreibung

Die Erfindung betrifft eine Vorrichtung zur Aufnahme von Gebinden mit einem Tragboden für die Gebinde und mit einer zumindest teilweise offenen Vorderseite zum Einbringen der Gebinde gemäß dem Oberbegriff des Anspruchs 1. Weiterhin betrifft die Erfindung eine Anlage zum Umpositionieren von Gebinden mit wenigstens einem Roboter gemäß dem Oberbegriff des Anspruchs 9.

Eine gattungsgemäße Vorrichtung bzw. ein gattungsgemäßes Verfahren wird beispielsweise in industriellen Fertigungsanlagen verwendet, wobei die gefertigten Produkte oder Waren zu unterschiedlich großen Verpackungseinheiten oder Gebinden gebündelt werden, um sie dann an einem weiteren Ort in größeren Transport- oder Lagereinheiten beispielsweise auf einer Palette als aufeinandergestapelte Warenlagen abzustellen. Insbesondere werden beim sogenannten gemischten Palettieren unterschiedliche Waren oder Warengebinde auf einer einzelnen Palette zusammengestellt, beispielsweise aufgrund einer Bestellung eines Einzelhändlers beim Großhändler. Dabei werden die gewünschten Waren von sortenreinen Paletten aufgenommen und auf eine Lieferpalette nach Kundenbestellung individuell aufgebaut. Eine weitere wichtige Anwendung ist auch das Entladen von Gebinden oder Warenlagen, beispielsweise von Neuglaspaletten, Dosenpaletten oder Paletten mit Kunststoffartikeln (PET-Flaschen), um die Produkte dann vereinzelt einer Abfüllmaschine zuzuführen. Dabei besteht nicht nur die Anforderung, einzelne Warenlagen von gestapelten Paletten zu entnehmen, sondern auch solche Gebinde aufzunehmen, die von andersartigen Peripheriekonstruktionen, wie beispielsweise Förderanlagen, bereitgestellt werden.

Zum Aufnehmen von auf Paletten gestapelten Gebinden sind Roboter mit einer an dem Roboterarm angeordneten Aufnahmevorrichtung für die Gebinde bekannt, welche auch als Depalettierwerkzeug oder Greifwerkzeug bezeichnet wird. Derartige Werkzeuge sind üblicherweise derart ausgestattet, dass die Aufnahme des Gebindes in vertikaler Richtung erfolgt, nachdem die Aufnahmevorrichtung über der Palette in Position gebracht und über das betreffende auf der Palette gestapelte Gebinde gestülpt worden ist. Auf diese Art kann ein sukzessives Entstapeln bzw. Aufstapeln von Paletten mit Gebinden durchgeführt werden.

Das dabei erforderliche Einbringen der Gebinde von unten in die Aufnahmevorrichtung ist jedoch oftmals nachteilig, insbesondere im Falle einer Bereitstellung der Gebinde mittels nicht freistehender Peripheriekonstruktionen, wie beispielsweise Förderanlagen, oder auch bei einer Mehrzahl von Paletten, bei welchen eine dicht aneinandergereihte Anordnung aus Raumökonomiegründen erforderlich ist. Demgegenüber ist ein zeitliches Einbringen des jeweiligen Gebindes in die Aufnahmevorrichtung vorzuziehen bzw. sogar erforderlich. Zu diesem Zweck ist es bekannt, von der Aufnahmevorrichtung des Roboters getrennte, externe Konstruktionen einzusetzen, welche die Gebinde seitlich in die Aufnahmevorrichtung bewegen. Diese Lösung ist jedoch mit dem Nachteil eines erhöhten Platzaufwandes behaftet und zudem wenig flexibel einsetzbar, da eine derartige Vorrichtung vor dem Be-/Entladen der Gebinde an dem festen Ort der jeweiligen Gebinde vorzusehen ist.

Die GB-A-2066201 zeigt eine Vorrichtung zur Aufnahme von Gebinden mit einem Tragboden für die Gebinde und mit einer zumindest teilweise offenen Vorderseite zum Einbringen der Gebinde, mit einem beweglich verbundenen Schieber zum Verlagern der Gebinde entlang einer horizontalen Aufnahmerichtung durch die offene Vorderseite auf einen Tragboden, und ein Verfahren zum Umpositionieren von Gebinden. Die FR-A-2878238 offenbart eine Anlage zum Umpositionieren von Gebinden mit wenigstens einem Roboter.

Die DE 199 14 264 C2 offenbart einem Palettierer für Behälter, der mit einem Arm mit n Freiheitsgraden, welcher einen Kopf mit m Freiheits-graden bezüglich des Armes trägt, sowie mit einem Sammeltisch für Behälter, die palettiert werden sollen, ausgebildet ist, wobei der Kopf ein Mitnehmerkopf ist, der die folgenden Elemente aufweist:
a) einen Mitnehmerrahmen, welcher Mittel zur horizontalen Verschiebung bezüglich des Kopfes aufweist sowie mindestens einen an den Mitnehmerrahmen angelenkten beweglichen Seitenhalter , um eine zu palettierende Behältergruppe zu umfassen und während ihres Transportes festzuhalten, und
b) eine Trageplattform, welche unterhalb des Mitnehmarrahmens angeordnet ist, um die vom Mitnehmerrahmen transportierte Behältergruppe aufzunehmen, und Mittel zur horizontalen Verschiebung bezüglich des Kopfes aufweist, um die Behältergruppe auf eine Palette zu stellen.

Der Erfindung liegt daher die Aufgabe zugrunde, unter Vermeidung der vorgenannten Nachteile, ein seitliches Einbringen von Gebinden in eine Aufnahmevorrichtung zu ermöglichen, die insbesondere hinsichtlich der Lage, der Ausbildung und der Umgebung der Gebinde flexibel einsetzbar ist.

Erfindungsgemäß wir die genannte Aufgabe mit einer Vorrichtung gemäß Anspruch 1 gelöst.

Durch die erfindungsgemäße Anordnung eines Schiebers an der Aufnahmevorrichtung wird also ein seitliches Einbringen selbst von ungünstig positionierten Gebinden ermöglicht. Zudem ist die Vorrichtung auch bei variierender Lage und Anordnung einzelner Gebinde einsetzbar.

In konkreter Ausgestaltung ist vorgesehen, dass der Schieber zwischen einer äußeren Position vor der offenen Vorderseite und einer inneren Position hinter der offenen Vorderseite verlagerbar ist.

Zur präzisen Positionierung des Schiebers wird vorgeschlagen, dass der Schieber schienengeführt ist. Vorzugsweise erfolgt dabei die Positionierung des Schiebers automatisch, Erfindungsgemäß ist vorgesehen, dass der Schieber mittels wenigstens eines Antriebs über Zahnriemen verlagerbar ist.

Eine einfache Handhabung der Gebinde kann dadurch erreicht werden, dass der Schieber zum umfänglichen Umgreifen der Gebinde ausgebildet ist. Eine erfindungsgemäße Ausgestaltung sieht dabei vor, dass der Schieber durch drei im Wesentlichen U-förmig angeordnete Schenkel gebildet ist, wobei zwei parallel verlaufende Seitenschenkel sich entlang der Aufnahmerichtung der Gebinde erstrecken und ein die beiden Seitenschenkel verbindender Querschenkel der offenen Vorderseite gegenüberliegt. In bevorzugter Ausführung sind dabei die Seitenschenkel schienenförmig ausgebildet und entlang jeweils einer oberhalb des Tragbodens angeordneten Schienenführung beweglich. Zum Erreichen einer gleichmäßigen Kräfteverteilung auf die Gebinde wird vorgeschlagen, dass der Querschenkel plattenförmig ausgebildet ist. Dadurch wird eine gleichmäßige Bewegung beim Einbringen der Gebinde erzielt und eine Beschädigung der Gebinde vermieden.

Gemäß der erfindungsgemäßen Aufnahmevorrichtung ist vorgesehen, dass oberhalb des Tragbodens jeweils ein entlang der beiden seitlichen Begrenzungen des Tragbodens sich erstreckendes Positionierelement zur Positionierung der Gebinde auf den Tragboden vorgesehen ist. Neben einer derartigen Positionierung der Gebinde auf dem Tragboden in seitlicher Richtung ist erfindungsgemäß eine Positionierung in Längsrichtung vorgesehen sein. Dies wird dadurch erreicht, dass oberhalb des Tragbodens ein entlang der Hinterseite des Tragbodens sich erstreckendes Positionierelement zur Positionierung der Gebinde auf dem Tragboden vorgesehen ist. Die Aufnahmeposition der Gebinde kann dadurch an unterschiedlich ausgebildete Gebinde angepasst und modifiziert werden, dass das jeweilige Positionierelement senkrecht zu seiner Erstreckungsrichtung auf dem Tragboden verlagerbar ist. Auch hierbei kann eine gleichmäßige Kraftübertragung dadurch erreicht werden, dass die Positionierelemente im Wesentlichen plattenförmig ausgebildet sind.

Gemäß der Aufnahmevorrichtung ist vorgesehen, dass der Tragboden mindestens zwei gegeneinander verfahrbare Tragbodenteile aufweist. Dadurch wird erreicht, dass die Gebinde auch in vertikaler Richtung aufgenommen und abgegeben werden können. In konkreter Ausgestaltung ist vorgesehen, dass die Tragbodenteile in bzw. gegen die horizontale Aufnahmerichtung der Gebinde verfahrbar sind.

Zur Verbindung mit einem Roboter ist vorgesehen, dass die Aufnahmevorrichtung eine Anschlusskupplung aufweist.

Zur Lösung der genannten Aufgabe mit einer Anlage der eingangs genannten Art wird vorgeschlagen, dass wenigstens einer der Roboter eine erfindungsgemäße Vorrichtung zur Aufnahme von Gebinden aufweist, wie sie vorangehend beschrieben worden ist. Gemäß einer bevorzugten Weiterbildung ist wenigstens ein Roboter zum Zusammenstellen von Waren zu Gebinden und wenigstens ein Roboter zur Aufnahme der Gebinde mit einer erfindungsgemäßen Aufnahmevorrichtung vorgesehen.

Nachfolgend ist die Erfindung anhand bevorzugter Ausführungsformen unter Bezugnahme auf die Zeichnungen näher erläutert, anhand welcher sich weitere Eigenschaften und Vorteile der Erfindung ergeben. Es zeigen:
- Figur 1: eine perspektivische Ansicht einer erfindungsgemäßen Vorrichtung in einer Position zur Aufnahme von Gebinden in horizontaler Richtung;
- Figur 2: eine weitere perspektivische Ansicht der in Fig. 1 gezeigten Vorrichtung in einer Position zur Abgabe von Gebinden in vertikaler Richtung;
- Figur 3: eine Ausgestaltung einer erfindungsgemäßen Anlage zum Umpositionieren von Gebinden in perspektivischer Darstellung; und
- Figur 4: eine alternative Ausgestaltung einer erfindungsgemäßen Anlage zum Umpositionieren von Gebinden in perspektivischer Darstellung.

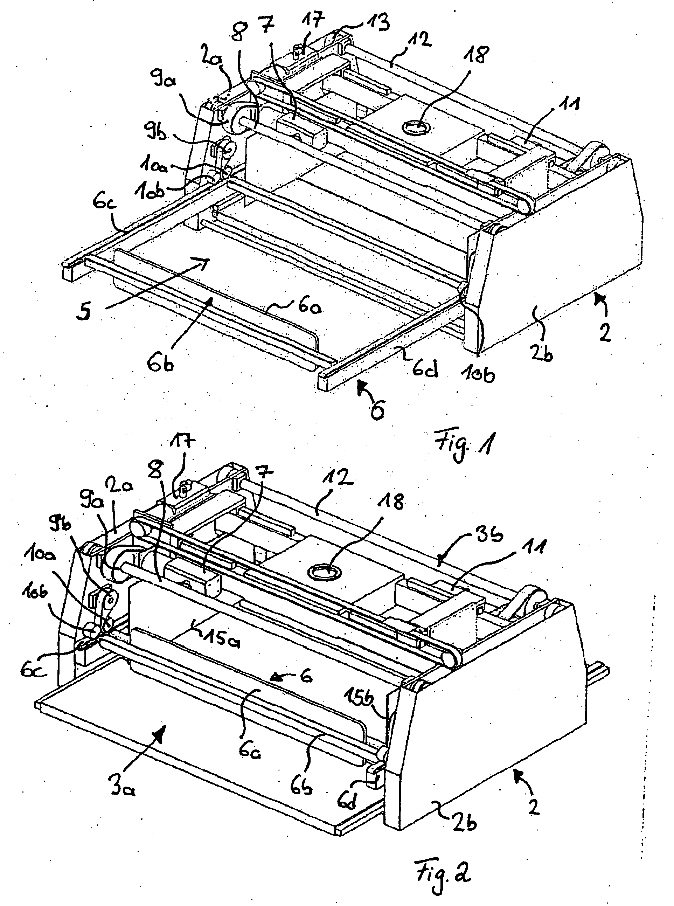

Die in Fig. 1 gezeigte Vorrichtung 1 weist einen Grundrahmen 2 auf, der zwei seitlich angeordnete Platten 2a, 2b aufweist, die auf der Oberseite starr miteinander verbunden sind. An der Unterseite des Grundrahmens 2 sind zwei Tragbodenteile 3a und 3b, in Form zweier identisch ausgebildeter Hälften eines Tragbodens angeordnet.

Die Vorderseite 5 der Vorrichtung weist eine Öffnung zwischen den seitlichen Platten 2a, 2b auf, durch welche ein Einbringen von Gebinden von außen in horizontaler Richtung auf die Tragbodenteile 3a, 3b möglich ist'. Gegenüber der Öffnung an der Vorderseite ist ein Schieber 6 frontseitig angeordnet. Dieser ist im Wesentlichen durch eine an einer Querleiste 6b befestigte Schiebeplatte 6ä gebildet, wobei die Querleiste 6b an beiden ihrer Enden mit einem Ende jeweils einer Seitenschiene 6c, 6d verbunden ist, so dass der Schieber 6 insgesamt im Wesentlichen eine U-Form aufweist.

An ihrem jeweiligen anderen Ende sind die Seitenschienen 6c, 6d mit jeweils einer Schienenführung verbunden, welche sich entlang der Innenseite der seitlichen Platten 2a, 2b in horizontaler Richtung erstrecken. Hierdurch ist eine teleskopartige Bewegung des Schiebers bezüglich des Grundrahmens 2 in horizontaler Richtung zwischen einer äußeren und einer inneren Position möglich. Die in Fig. 1 gezeigte.Darstellung der Vorrichtung 1 entspricht dabei der äußeren Position, in welcher der Schieber 6 mit den Seitenschienen 6c, 6d im Wesentlichen vollständig außerhalb der Öffnung an der Vorderseite 5 angeordnet ist.

Dagegen entspricht die in Fig. 2 gezeigte Darstellung der Vorrichtung 1 der inneren Position, wobei die Seitenschienen 6c, 6d im Wesentlichen vollständig in den Innenraum eingefahren werden, so dass sich die Schiebeplatte 6a möglichst nahe an der Öffnung der Vorderseite 5 befindet, bzw. in diese eintritt.

Für ein automatisiertes Bewegen des teleskopartigen Schiebers 6 zwischen der äußeren und inneren Position ist ein Antrieb 7 in Form eines elektrischen Motors vorgesehen, dessen Motorkraft über eine Verteilerwelle 8 und eine Kombination von Zahnriemen 9a, 9b, 10a, 10b auf jeweils eine der Seitenschienen 6c, 6d zur horizontalen Bewegung derselben übertragen wird.

Die Tragbodenteile 3a, 3b des Tragbodens sind mittels beidseitig angeordneter Schiebelagerungen ebenfalls beweglich ausgebildet, so dass sie gegeneinander verfahrbar sind. Ein automatisiertes und synchrones Bewegen der beiden Tragbodenteile 3a, 3b aufeinander zu und voneinander weg ist durch einen weiteren elektrischen Motor 11 gewährleistet, der über einen Zahnriemen eine Verteilerwelle 12 antreibt, welche auf einen jeweils beidseitig angeordneten weiteren Antriebsriemen 13 einwirkt, welcher wiederum über jeweils einen Mitnehmer mit jeweils einem der Tragbodenteile 3a, 3b wirkverbunden ist.

Zum asynchronen Bewegen der beiden Tragbodenteile 3a, 3b kann in einer Weiterbildung ein zusätzlicher Motor vorgesehen sein. Somit sind auch die Tragbodenteile 3a, 3b zwischen einer äußeren und einer inneren Position verfahrbar.

Die in Fig. 1 gezeigte Darstellung entspricht dabei der inneren Position der Tragbodenteile 3a, 3b, bei welcher die beiden Tragbodenteile 3a, 3b vollständig zwischen den seitlichen Platten 2a, 2b des Grundrahmens 2 angeordnet sind und an einem ihrer Enden derart aneinandergrenzen, dass ein kontinuierlicher Tragboden aus den beiden Hälften gebildet ist.

In der in Fig. 2 gezeigten Darstellung, welcher der äußeren Position entspricht, sind die beiden Tragbodenteile .3a, 3b in horizontaler Richtung zur Vorder- bzw. Hinterseite hin derart gegeneinander verfahren, dass sie im Wesentlichen außerhalb des von den Platten 2a, 2b begrenzten Innenraums angeordnet sind und zwischen den Platten 2a, 2b eine Öffnung nach unten gebildet ist. Diese Position ist zur vertikalen Abgabe bzw. Aufnahme von Gebinden geeignet.

Die Oberflächen der Tragbodenteile 3a und 3b sind aus gleitfähigen Edelstahlblechen hergestellt. Die Edelstahlbleche sind zur Verringerung der Kontaktfläche mit den aufgestellten Waren noppen- oder rillenartig geprägt oder umgeformt. Alternativ können die Oberflächen der Tragbodenteile 3a und 3b auch mit aktiv antreibbaren Förderbändern oder passiven Laufrollen ausgestattet sein.

Zum Positionieren der aufgenommen Gebinde auf dem Tragboden ist weiterhin eine Zentriereinrichtung vorgesehen. Diese umfasst eine Seitenzentrierung, die im Wesentlichen mittels zweier entlang der Innenseiten der Platten 2a, 2b des Grundrahmens angeordneter verfahrbarer Schiebeplatten 15a, 15b realisiert ist. Dadurch wird die Aufnahme beliebig dimensionierter Gebinde an einer definierten Seitenposition ermöglicht. Zusätzlich ist an der Hinterseite der Vorrichtung zwischen den Platten 2a, 2b eine rückseitige, ebenfalls verfahrbare Schiebeplatte 6a vorgesehen, durch welche zusammen mit der teleskopartig in horizontaler Richtung verfahrbaren Schiebeplatte 6a des Schiebers 6 eine Positionierung hinsichtlich der Vorder- bzw. Hinterseite der Vorrichtung auf dem Tragboden möglich ist. Insgesamt ist also eine vierseitige Positionierung der aufgenommenen Gebinde möglich.

Eine automatisierte synchrone Bewegung der seitlich angeordneten Schiebeplatten 15a und 15b ist durch eine Antriebseinheit 17 in Form eines Elektromotors bewerkstelligt, welcher mit einem weiteren Zahnriemen gekoppelt ist, der seinerseits mit zwei Verbindungsstücken verbunden ist. Jeweils ein Verbindungsstück ist fest mit einer der Schiebeplatten verbunden, so dass bei einem Antrieb des Zahnriemens in Abhängigkeit der Drehrichtung der Antriebseinheit die beiden Schiebeplatten 15a, 15b synchron aufeinander zu oder voneinander weg bewegt werden. Durch eine weitere Antriebseinheit (nicht gezeigt) wird auch ein automatisiertes Verstellen der rückseitigen Schiebeplatten 6a ermöglicht, wobei die Kraftübertragung ebenfalls mittels Zahnriemen erfolgt.

Auf der Oberseite der Vorrichtung 1 ist eine Anschlusskupplung 18 vorgesehen, über welche eine Verbindung mit dem Arm eines Roboters hergestellt werden kann.

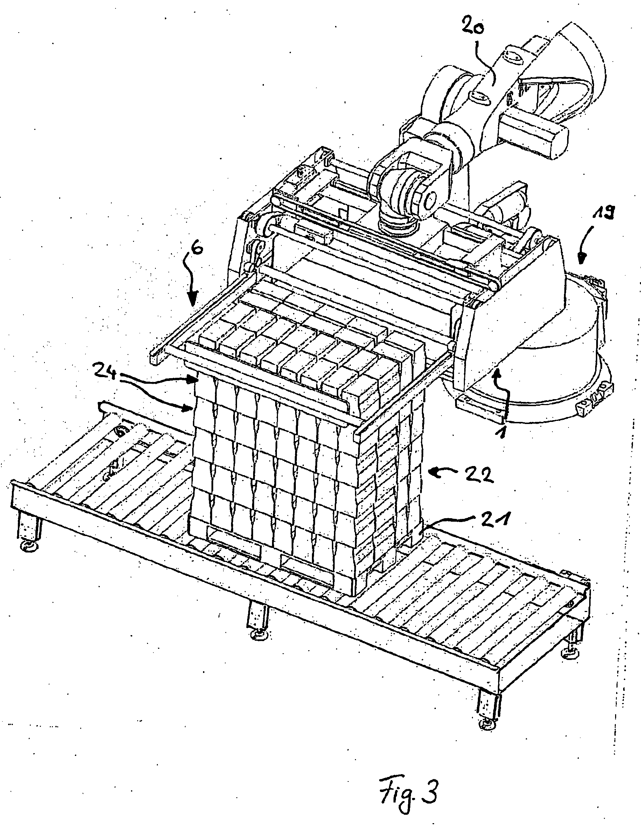

In Fig. 3 ist eine Anlage zum Umpositionieren von Gebinden dargestellt, bei welcher die in Fig. 1 und in Fig. 2 gezeigte Vorrichtung 1 zur Aufnahme von Gebinden vorteilhaft zum Einsatz kommt. Die Aufnahmevorrichtung 1 ist am Arm 20 eines Roboters 19 befestigt, welcher die Aufnahmevorrichtung 1 oberhalb eines auf einer Palette 21 angeordneten Stapels 22 von Gebinden positioniert, wobei der Stapel 22 mittels eines Förderbandes 23 antransportiert worden ist. Ein Gebinde ist dabei durch jeweils eine Warenlage 24 des Stapels 22 gebildet. Der Schieber 6 nimmt die in Fig. 1 gezeigte äußere Position ein, welche zur Aufnahme von Gebinden vorgesehen ist. Durch die U-förmige Kontur des Schiebers 6 wird der Stapel 22 beim Absenken der Aufnahmevorrichtung 1 durch den Roboter 19 vorteilhaft umgriffen.

Zur Höhenpositionierung der Aufnahmevorrichtung 1 auf einer Ebene zwischen zwei Warenlagen oder Gebinden 24 sind Lichtschranken als Sensoren vorgesehen, die nicht nur die Grenzebene zwischen zwei Warenlagen, sondern auch einen Zwischenraum zwischen zwei Waren oder Warengebinden in derselben Ebene erkennen können. Dazu können die Sensoren beispielsweise am vorderen Ende der Tragbodenteile 3a, 3b angeordnet sein. Diese Sensoren können entweder zusätzlich die Höhe der Lage detektieren oder es können separate Sensoren dazu vorgesehen sein, die beispielsweise an dem Grundrahmen der Aufnahmevorrichtung befestigt sind. Nachdem der Schieber 6 die entsprechende Position an der obersten Warenlage 24 eingenommen hat, kann die entsprechende Warenlage von dem Stapel 22 durch den Schieber 6 in die Aufnahmevorrichtung 1 abgezogen werden. Dabei ist zwischen jeweils 2 Warenlagen eine Trennschicht als Zwischenlage eingefügt, so dass die Warenlage von dieser Trennschicht problemlos abschiebbar ist, ohne dabei die darunterliegende Warenlage zu beeinflussen oder zu beschädigen. Derartige Zwischenlagen können beispielsweise in Form von Papier- oder Kartonlagen ausgebildet sein. Bei einfachen Waren, wie beispielsweise großflächigen Kartons, kann die Anordnung eine Zwischenlage nicht notwendig sein.

Nun ist es möglich, das Gebinde an einen anderen Ort mittels Verschwenken des Roboterarms 20 umzupositionieren. Daraufhin erfolgt die Abgabe des Gebindes beispielsweise auf einen anderen Stapel von Gebinden durch Absetzen der Aufnahmevorrichtung 1 auf dem Stapel und durch Verfahren der beiden Tragbodenteile 3a, 3b in die in der Fig. 2 gezeigten äußere Position.

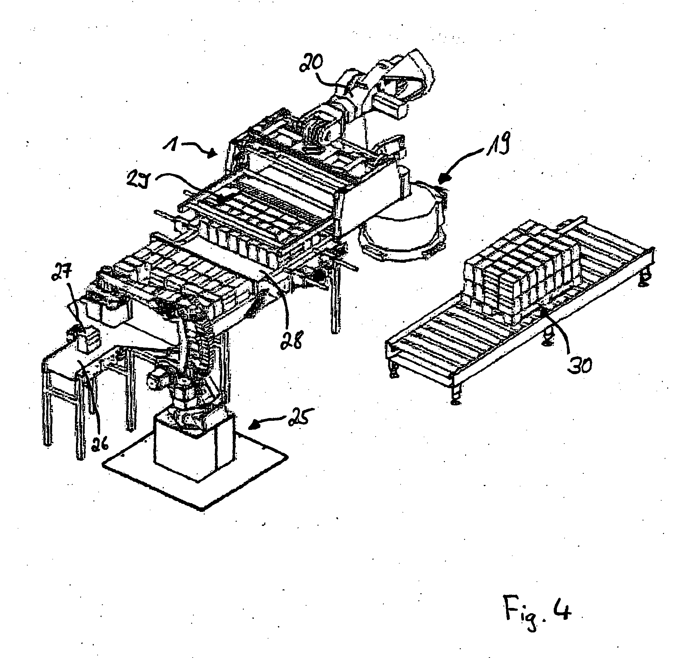

Die Fig. 4 zeigt eine andere Ausgestaltung einer erfindungsgemäßen Anlage zum Umpositionieren von Gebinden. Dabei ist neben dem Roboter 19 mit der erfindungsgemäßen Aufnahmevorrichtung 1 ein weiterer Roboter 25 vorgesehen, der auf einem Förderband 26 antransportierte Waren 27 zu jeweiligen Gebinden 29 zusammenstellt. Mittels eines weiteren Förderbandes 28 werden die Gebinde in den Einzugsbereich des Roboters 19 herangeführt. Dieser positioniert die Aufnahmevorrichtung 1 über dem Gebinde 29 und stellt nach dem Aufnehmen des Gebindes 29 dieses in der vorher beschriebenen Weise auf dem Stapel 30 als Warenlage ab. Nach Erreichen einer vorgesehenen Höhe des Stapels 30 mit Warenlagen wird dieser durch das Förderband 31 abtransportiert.

In einer hierzu alternativen Ausgestaltung ist vorgesehen, dass der Roboter 19 nicht zum Beladen, sondern zum Entladen des Stapels 30 eingesetzt wird. Dabei erfolgt die Aufnahme der einzelnen Warenlagen mittels des Schiebers 6 der Vorrichtung 1 in horizontaler Richtung in der oben beschriebenen Weise. Die Abgabe jeweils einer Warenlage auf das Förderband 28 erfolgt in vertikaler Richtung durch gegenseitiges Verfahren der Tragbodenteile 3a, 3b in die in der Fig. 2 gezeigten äußeren Position. Nun übernimmt der Roboter 25 das Entnehmen einzelner Waren 27 aus dem Gebinde. Dabei kann es sich beispielsweise um Neuglaspaletten, Dosenpaletten oder Paletten mit Kunststoffartikeln (PET-Flaschen) handeln. Die so entnommenen Waren können dann vereinzelnd dann beispielsweise einer Abfüllmaschine zugeführt werden.

## Patentansprüche

1. Vorrichtung zur Aufnahme von Gebinden mit einem Tragboden (3a, 3b) für die Gebinde und mit einer zumindest teilweise offenen Vorderseite (5) zum Einbringen der Gebinde, mit einem beweglich verbundenen Schieber (6) zum Verlagern der Gebinde entlang einer horizontalen Aufnahmerichtung durch die offene Vorderseite (5) auf einen Tragboden, wobei oberhalb des Tragbodens jeweils ein entlang der beiden seitlichen Begrenzungen des Tragbodens sich erstreckendes verfahrbar Positionierelement (15a, 15b) zur Positionierung der Gebinde auf dem Tragboden vorgesehen ist, wobei der Tragboden mindestens zwei gegeneinander in bzw. gegen die Aufnahmeeinrichtung der Gebinde verfahrbare Tragbodenteile (3a, 3b) aufweist, wobei die Vorrichtung eine Anschlusskupplung (18) zur Verbindung mit einem Roboter (19) aufweist, der Schieber (6) mittels wenigstens eines Antriebs (7) über Zahnriemen (9a, 9b) verlagerbar ist der Schieber durch drei im Wesentlichen U-förmig angeordnete Schenkel (6b, 6c, 6d) gebildet ist, zwei parallel verlaufende Seitenschenkel (6c, 6d) sich entlang der Aufnahmerichtung der Gebinde erstrecken und ein die beiden Seitenschenkel verbindender Querschenkel (6b) der offenen Vorderseite gegenüberliegt und wobei oberhalb des Tragbodens (3a, 3b) ein entlang der Hinterseite des Tragbodens (3a, 3b) sich erstreckendes Positionierelement (16) zur Positionierung der Gebinde auf dem Tragboden (3a, 3b) vorgesehen ist.

2. Vorrichtung nach Anspruch 1, **dadurch gekennzeichnet, dass** der Schieber (6) zum umfänglichen Umgreifen der Gebinde ausgebildet ist.

3. Vorrichtung nach Anspruch 1 oder 2, **dadurch gekennzeichnet, dass** der Schieber (6) zwischen einer äußeren Position vor der offenen Vorderseite (5) und einer inneren Position hinter der offenen Vorderseite (5) verlagerbar ist.

4. Vorrichtung nach einem der Ansprüche 1 bis 3, **dadurch gekennzeichnet, dass** der Schieber (6) schienengeführt ist.

5. Vorrichtung nach Anspruch 1, **dadurch gekennzeichnet, dass** die Seitenschenkel (6c, 6d) schienenförmig ausgebildet und entlang jeweils einer oberhalb des Tragbodens angeordneten Schienenführung beweglich sind.

6. Vorrichtung nach Anspruch 1 oder 5, **dadurch gekennzeichnet, dass** der Querschenkel (6a, 6b) plattenförmig ausgebildet ist.

7. Vorrichtung nach Anspruch 6 oder 7, **dadurch gekennzeichnet, dass** das jeweilige Positionierelement (15a, 15b, 16) senkrecht zu seiner Erstreckungsrichtung auf dem Tragboden (3a, 3b) verlagerbar ist.

8. Vorrichtung nach einem der Ansprüche 6 bis 7, **dadurch gekennzeichnet, dass** die Positionierelemente (15a, 15b, 16) im Wesentlichen plattenförmig ausgebildet sind.

9. Anlage zum Umpositionieren von Gebinden mit wenigstens einem Roboter, **dadurch gekennzeichnet, dass** wenigstens einer der Roboter (19) eine Vorrichtung (1) zur Aufnahme von Gebinden nach einem der Ansprüche 1 bis 8 aufweist.

10. Anlage nach Anspruch 9, **gekennzeichnet durch** wenigstens einen Roboter (25) zum Zusammenstellen von Waren zu Gebinden und wenigstens einen Roboter (19) zur Aufnahme der Gebinde (29) mit einer Aufnahmevorrichtung (1) nach einem der Ansprüche 1 bis 8.

## Claims

1. A device for receiving containers with a supporting base (3a, 3b) for the containers and with an at least partially open front side (5) for introducing the containers, with a movably connected slide (6) for displacing the containers along a horizontal receiving direction through the open front side (5) onto a supporting base, wherein a displaceable positioning element (15a, 15b), extending along both lateral limits of the supporting base , is provided above the supporting base for positioning the containers on the supporting base, wherein the supporting base has at least two supporting base parts (3a, 3b) that can be displaced towards each other in or against the receiving direction of the containers, wherein the device has a connecting coupling (18) for connection to a robot (19), wherein the slide (6) is displaceable by means of at least one drive (7), by means of toothed belts (9a, 9b), the slide is formed by three legs (6b, 6c, 6d) arranged essentially in a U shape, two lateral legs (6c, 6d), running parallel with each other, extend along the receiving direction of the containers, and wherein a transverse leg (6b) connecting the two lateral legs is located opposite to the open front slide, and wherein a positioning element (16), extending along the rear side of the supporting base (3a, 3b), is provided above the supporting base (3a, 3b) for positioning the containers on the supporting base (3a, 3b).

2. The device according to Claim 1, **characterized in that** the slide (6) is designed for circumferential gripping of the containers.

3. The device according to Claim 1 or 2, **characterized in that** the slide (6) is displaceable between an outer position in front of the open front side (5) and an inner position behind the open front side (5).

4. The device according to any one of Claims 1 to 3, **characterized in that** the slide (6) is rail-guided.

5. The device according to Claim 1, **characterized in that** the lateral legs (6c, 6d) are designed in the shape of rails, and are movable along a rail guide arranged above the supporting base.

6. The device according to Claim 1 or 5, **characterized in that** the transverse leg (6a, 6b) is designed so that it is plate-shaped.

7. The device according to Claim 1 or 6, **characterized in that** the relevant positioning element (15a, 15b, 16) is displaceable at right angles to its direction of extension on the supporting base (3a, 3b).

8. The device according to any one of Claims 6 to 7, **characterized in that** the positioning elements (15a, 15b, 16) are designed essentially plate-shaped.

9. A system for repositioning containers with at least one robot, **characterized in that** at least one of the robots (19) has a device (1) for receiving containers according to any one of Claims 1 to 8.

10. The system according to Claim 9, **characterized by** at least one robot (25) for assembling products to form containers and at least one robot (19) for receiving the containers (29) with a receiving device (1) according to any one of Claims 1 to 8.

## Revendications

1. Dispositif destiné à la réception de récipients avec un fond de support (3a, 3b) prévu pour les récipients et avec un côté avant (5) ouvert au moins en partie pour amener les récipients, avec un élément poussoir (6) relié de façon mobile pour disposer les récipients sur un fond de support à travers le côté avant ouvert (5), le long d'une direction de réception horizontale, prévoyant un élément de positionnement (15a, 15b) mobile s'étendant le long des deux délimitations latérales du fond de support soit respectivement placé au-dessus du fond de support pour le positionnement des récipients sur le fond de support, le fond de support comportant au moins deus parties de fond de support (3a, 3b) mobiles l'une par rapport à l'autre dans et/ou contre le dispositif de réception des récipients, le dispositif comportant un couplage de raccordement (18) pour assurer la liasion avec un robot (19), l'élément poussoir (6) pouvant être déplacé à l'aide d'au moins un entraînement (7), de préférence par l'intermédiaire d'une courroie dentée (9a, 9b), l'élément poussoir étant constitué de trois côtés (6b, 6c, 6d) ayant pour l'essentiel une forme en U, deux côtés latéraux parallèles (6c, 6d) s'étendant le long de la direction de réception des récipients et un côté transversal (6b) reliant les deux côtés latéraux étant situé à l'opposée du côté avant ouvert et un élément de positionnement (16) s'étendant le long du côté arrière du fond de support (3a, 3b) étant prévu au-dessus du fond de support (3a, 3b) pour le positionnement des récipients sur le fond de support (3a, 3b).

2. Dispositif selon la revendication 1, **caractérisé en ce que** l'élément poussoir (6) est réalisé de façon à saisir largement les récipients.

3. Dispositif selon la revendication 1 ou 2, **caractérisé en ce que** l'élément poussoir (6) peut être déplacé entre une position extérieure placée devant le côté avant ouvert (5) et une position intérieure placée derrière le côté avant ouvert (5).

4. Dispositif selon l'une quelconque des revendications 1 à 3, **caractérisé en ce que** l'élément poussoir (6) est guidé sur des rails.

5. Dispositif selon la revendication 1, **caractérisé en ce que** les côtés latéraux (6c, 6d) sont réalisés en forme de rail et sont mobiles le long d'un guide de rail disposé au-dessus du fond de support respectivement.

6. Dispositif selon la revendication 1 ou 5, **caractérisé en ce que** le côté transversal (6a, 6b) est réalisé en forme de plaque.

7. Dispositif selon la revendication 1 ou 6, **caractérisé en ce que** l'élément de positionnement (15a, 15b, 16) respectif est déplaçable sur le fond de support (3a, 3b) perpendiculairement à sa direction d'extension.

8. Dispositif selon l'une quelconque des revendications 6 à 7, **caractérisé en ce que** les éléments de positionnement (15a, 15b, 16) prennent pour l'essentiel une forme de plaque.

9. Installation de repositionnement de récipients avec au moins un robot, **caractérisé en ce qu'**au moins un des robots (19) comporte un dispositif (1) destiné à la réception de récipients selon l'une quelconque des revendications 1 à 8.

10. Installation selon la revendication 9, **caractérisé par** au moins un robot (25) permettant de rassembler des marchandises dans des récipients et par au moins un robot (19) destiné à la réception des récipients (29) avec un dispositif de réception (1) selon l'une quelconque des revendications 1 à 8.
